# EUROPÄISCHE PATENTANMELDUNG

(11) **EP 3 459 660 A1**
(43) Veröffentlichungstag der Anmeldung: **27.03.2019**
(21) Anmeldenummer: 18184137.0
(22) Anmeldetag: 18.07.2018
(51) Int. Cl.: B23B 31/11, B23B 31/20

(54) **ADAPTER ZUR HALTERUNG EINES WERKZEUGS IN EINEM SPANNZANGENFUTTER**

(30) Priorität: 04.09.2017 DE 102017120235
(71) Anmelder: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau

(57) **Zusammenfassung**

Die Erfindung betrifft einen Adapter (1) zur Halterung eines Werkzeugs in einem Spannzangenfutter, wobei der Adapter (1) einen Außenkonus (3) zur Aufnahme des Adapters (1) in dem Spannzangenfutter enthält. Erfindungsgemäß weist der Adapter (1) ein Gewinde (7) zur Befestigung des Werkzeugs auf und an einer Außenfläche (5) des Außenkonus (3) sind mehrere Formschlusselemente (14) zur drehgesicherten Halterung des Aufnahmekörpers (1) bei der Befestigung des Werkzeugs angeordnet.

## Beschreibung

Die Erfindung betrifft einen Adapter zur Halterung eines Werkzeugs in einem Spannzangenfutter nach dem Oberbegriff des Anspruchs 1. Die Erfindung betrifft außerdem ein Spannzangenfutter mit einem solchen Adapter, eine Haltevorrichtung zur drehgesicherten Halterung eines derartigen Adapters bei der Befestigung eines Werkzeugs und ein System aus einem derartigen Adapter und einer Haltevorrichtung.

Spannzangenfutter bzw. Spannzangenaufnahmen sind verbreitete Spannmittel, um Werkzeuge mit hoher Genauigkeit schnell und kraftschlüssig einzuspannen. Sie weisen üblicherweise einen Futterkörper mit einem Innenkegel, eine in den Innenkegel des Futterkörpers einsetzbare Spannzange und eine mit dem Futterkörper verschraubte Überwurfmutter auf. Die Spannzange enthält einen geschlitzten Aufnahmekörper mit einem an den Innenkegel des Futterkörpers angepassten Außenkonus und einer auf den Werkzeugschaft des zu spannenden Werkzeugs abgestimmten Aufnahmeöffnung. Durch Anziehen der Überwurfmutter kann die Spannzange in den Innenkegel des Futterkörpers eingepresst und so die Spannzange zur Klemmung des Werkzeugschafts zusammengedrückt werden. Spannzangen sind so ausgelegt, dass sie die über die Überwurfmutter einwirkende axial verlaufende Kraft über ihre konische Form in eine quer zur Rotationsachse und damit in eine auf einen Werkzeugschaft wirkende Haltekraft umwandeln.

Aus der DE 87 17 516 U1 ist ein derartiges Spannzangenfutter mit einer Spannzange bekannt. Um eine schlupffreie Übertragung des Drehmoments zwischen dem Spannfutter und der Spannzange bei der Zerspanung zu gewährleisten, weist die Spannzange an ihrem in das Spannfutter ragende Ende einen Zapfen mit einem axialsymmetrisch angeordneten Außensechskant auf, der von einem Innensechskant des Spannfutters formschlüssig aufgenommen wird. Ein solches Spannzangenfutter wird zum Spannen von Bohrern, Fräsern oder anderen Zerspanwerkzeugen mit einem zylindrischen Werkzeugschaft eingesetzt. Der Werkzeugschaft wird durch die über die Überwurfmutter erzeugte Spannkraft befestigt. Die Verwendung einer solchen Spannzange ist nur mit einem speziell dafür ausgebildeten Futter und bei Werkzeugen mit einem ausreichend langen Werkzeugschaft möglich.

Aufgabe der Erfindung ist es, einen universellen Adapter für ein Spannzangenfutter, ein Spannzangenfutter für einen solchen Adapter, eine Haltevorrichtung für einen solchen Adapter zur Befestigung eines Werkzeugs und ein System aus einem solchen Adapter und einer Haltevorrichtung zu schaffen, die eine einfache Montage von Werkzeugen mit Befestigungsgewinde und deren Halterung in einem Spannzangenfutter ermöglichen.

Diese Aufgabe wird durch einen Adapter mit den Merkmalen des Anspruchs 1, durch ein Spannzangenfutter mit den Merkmalen des Anspruchs 11, durch eine Haltevorrichtung mit den Merkmalen des Anspruchs 13 und durch ein System mit den Merkmalen des Anspruchs 17 gelöst. Zweckmäßige Weiterbildungen und vorteilhafte Ausführungsformen der Erfindung sind in den Unteransprüchen angegeben.

Der erfindungsgemäße Adapter weist ein Gewinde zur Befestigung eines Werkzeugs auf. Im Gegensatz zu einer Spannzange wird bei dem erfindungsgemäßen Adapter das Werkzeug nicht unter Zuhilfenahme des Spannzangenfutters befestigt, sondern der Adapter wird mit dem bereits montierten Werkzeug in das Spannzangenfutter eingesetzt. An einer Außenfläche des Außenkonus sind mehrere Formschlusselemente zur drehgesicherten Halterung des Adapter und damit des Aufnahmekörpers bei der Montage des Werkzeugs am Aufnahmekörper vorgesehen. Dadurch kann verhindert werden, dass sich der Adapter beim Einschrauben eines mit einem Befestigungsgewinde versehenen Werkzeugs in den Aufnahmekörper mitdreht. Der Adapter kann drehgesichert gehalten und das Werkzeug unter Aufwendung des erforderlichen Drehmoments in den Aufnahmekörper eingeschraubt werden. Danach kann der Adapter in ein gewöhnliches Spannzangenfutter anstatt einer Spannzange eingesetzt und mit einer Überwurfmutter gehalten werden. Dadurch kann die Montage erheblich vereinfacht werden. Da der Adapter bei der Montage im Gegensatz zur Spannzange im Wesentlichen nicht verformt wird, ist weiterhin ein wiederhohlgenaues Einsetzen des Adapters und damit des Werkzeuges möglich.

In einer besonders zweckmäßigen Ausführung sind die Formschlusselemente in einem mittleren Bereich des Außenkonus angeordnet. Dies hat den Vorteil, dass über und unter den Formschlusselementen noch umlaufende Kegelabschnitte verbleiben, die den Adapter in einem Innenkegel einer Spannzangenaufnahme halten und zentrieren können. Der Adapter kann so mit hoher Genauigkeit und Biegesteifigkeit gespannt werden, ohne dabei die axiale Länge des Adapters zu vergrößern. Der Adapter kann somit in ein genormtes und damit handelsübliches, vorzugsweise "ER"-, Spannzangenfutter eingesetzt werden. Die Formschlusselemente können aber auch am schmaleren Ende des Außenkonus oder an einem anderen Bereich des Außenkonus vorgesehen sein.

Die Formschlusselemente können in einer vorteilhaften Ausgestaltung in Form von mehreren, über den Umfang verteilten Schlüsselflächen ausgebildet sein. Die Schlüsselflächen weisen in Axialrichtung des Adapters gesehen vorzugsweise eine Länge von 1/5 bis 1/3 der Länge des Außenkonus auf.

In einer weiteren vorteilhaften Ausführung befindet sich an mindestens einer Schlüsselfläche eine radiale Durchgangsöffnung, die in einen Einlass an einem Einsteckende des Außenkonus mündet. Über den Einlass und die radiale Durchgangsöffnung kann ein Kühl- oder Schmiermittel zu einem zwischen der Schlüsselfläche und einem Innenkegel der Spannzangenaufnahme begrenzten Stau- oder Verteilerraum geleitet werden. In dem Adapter kann ferner mindestens ein Zufuhrkanal für die Weiterleitung eines über den Einlass und die mindestens eine Durchgangsöffnung zugeführten Kühl- oder Schmiermittels zu einer werkzeugseitigen Stirnseite des Adapters angeordnet sein. Dadurch kann das Kühl- oder Schmiermittel zu dem Werkzeug geleitet werden.

Zweckmäßigerweise verläuft der Zufuhrkanal schräg zu einer Mittelachse des Adapters, wodurch das Kühl- oder Schmiermittel auf die Spitze eines Werkzeugs gerichtet werden kann.

An der Außenfläche des Außenkonus kann ein in der Höhe der Schlüsselflächen umlaufender Verteilerkanal angeordnet sein. Dadurch kann das in den Aufnahmekörper eingeleitete Kühl- oder Schmiermittel über den Umfang des Adapters verteilt und zu mehreren Zufuhrkanälen geleitet werden.

Die Erfindung betrifft außerdem ein Spannzangenfutter mit einem vorstehend beschriebenen Adapter. Die vorzugsweise als Schlüsselflächen ausgebildeten Formschlusselemente sind bevorzugt so angeordnet, dass sie mit dem Innenkegel eines Futterkörpers des Spannzangenfutters einen Stauraum begrenzen.

Eine erfindungsgemäße Haltevorrichtung zur drehgesicherten Halterung eines vorstehend beschriebenen Adapters ist gekennzeichnet durch einen Träger mit mindestens einer Öffnung und an der Innenseite der Öffnung angeordneten Halteflächen, die zum formschlüssigen Eingriff mit den Formschlusselementen des Adapters ausgebildet sind. Der Adapter kann in die Haltevorrichtung eingesetzt werden und wird in dieser gegen Verdrehen gesichert gehalten, wenn ein Werkzeug in oder an dem Adapter festgeschraubt wird. Durch die Haltevorrichtung wird der Adapter an einer Drehbewegung gehindert und das mit einem Befestigungsgewinde versehene Werkzeug kann mit einem geforderten Drehmoment befestigt werden. Der Adapter kann dann wie gewohnt in einem Spannzangenfutter montiert werden.

Zweckmäßigerweise sind die Halteflächen der Haltevorrichtung nach innen gewölbt. Dadurch kann ein linienförmiger Kontakt zwischen den Halteflächen und den Formschlusselementen am Adapter erzielt werden. Bei einer planen Ausgestaltung der Halteflächen würde nur ein punktförmiger Kontakt an den in Umfangsrichtung äußersten Ecken der Schlüsselflächen entstehen. Die Halteflächen können vorzugsweise an mehreren gleichmäßig über den Umfang der Öffnung verteilten Haltestiften angeordnet sein. Alternativ kann die Aufnahmeöffnung der Haltevorrichtung mit den nach innen gewölbten Halteflächen auch aus einem Stück gefertigt sein.

Da der Adapter bei der Montage im Spannzangenfutter nicht verformt wird, weist dieser vorzugweise keine Schlitze oder Durchbrüche auf, die von der Außenseite bis zu einer durchgängigen Öffnung reichen, abgesehen von Öffnungen, die für die Kühlmittelführung vorgesehen sind.

Vorzugsweise kann der Adapter so ausgebildet sein, dass die Auflagebereiche für ein Werkzeug mit Befestigungsgewinde nach dem Befestigen des Adapters mit der Überwurfmutter im Spannzangenfutter in axialer Richtung oberhalb des Spannzangenfutters angeordnet sind. In einer alternativen Form kann auch der Gewindeabschnitt in axialer Richtung zumindest teilweise oberhalb des werkzeugseitigen Endes des Spannzangenfutters im Adapter ausgebildet sein. Dies ist dadurch möglich, dass das Werkzeug nicht durch eine über die Überwurfmutter eingeleitete Presskraft befestigt wird. Der Adapter weist einen Kragen auf, der in axialer Richtung über die Überwurfmutter hinausragt. Da der Werkzeugschaft nicht in den Bereich des Spannzangenfutters hineinragen muss, kann auch mit kurzen Werkzeugen eine große Auskraglänge erzielt werden.

Weitere Besonderheiten und Vorzüge der Erfindung ergeben sich aus der folgenden Beschreibung eines bevorzugten Ausführungsbeispiels anhand der Zeichnung. Sie zeigen:
- **Fig. 1**: einen Adapter zur Halterung eines Einschraubwerkzeugs in einer Perspektive;
- **Fig. 2**: den Adapter von Figur 1 in einem Längsschnitt;
- **Fig. 3**: ein Spannzangenfutter mit einem Adapter;
- **Fig. 4**: eine Haltevorrichtung zur drehgesicherten Halterung eines Adapters;
- **Fig. 5**: eine Detailansicht der Haltevorrichtung von Figur 3 in einem Schnitt und
- **Fig. 6**: einen Querschnitt durch eine Haltevorrichtung mit Adapter.

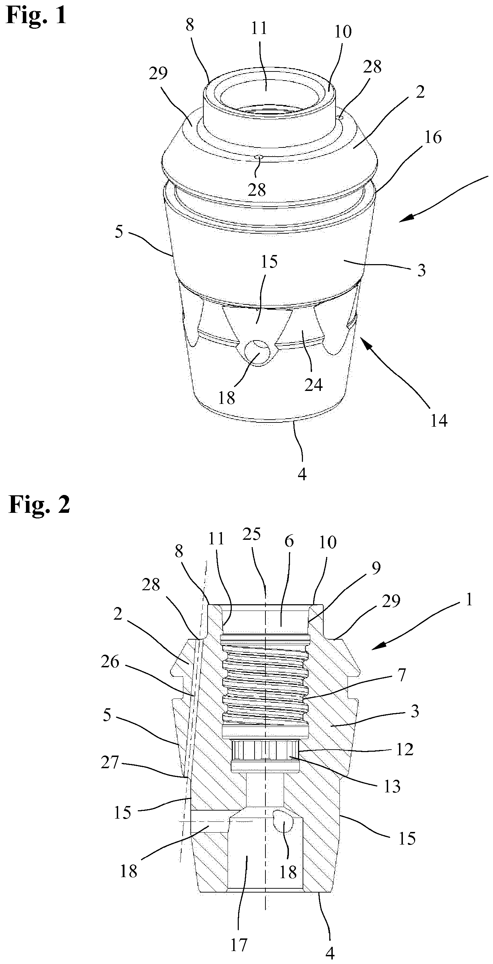

In den Figuren 1 und 2 ist ein Adapter 1 zum Spannen eines mit einem Befestigungsgewinde versehenen Werkzeugs in einer Spannzangenaufnahme gezeigt. Der in den Figuren 1 und 2 in einer Seitenansicht und einem Längsschnitt gezeigte Adapter 1 weist einen rotationssymmetrischen Aufnahmekörper mit einem Aufnahmebereich 2 zum Einsetzen eines Werkzeugs und einem Außenkonus 3 zur Aufnahme in einem entsprechenden Innenkegel des Futterkörpers eines an sich bekannten Spannzangenfutters auf. Der sich zu einem Einsteckende 4 des Adapters hin verjüngende Außenkonus 3 enthält eine konische Außenfläche 5, die an die Innenkontur eines entsprechenden Innenkegels im Futterkörper einer Spannzangenaufnahme angepasst ist.

Wie aus Figur 2 hervorgeht, ist in dem Adapter 1 eine Aufnahmeöffnung 6 mit einem hier als Innengewinde ausgeführten Gewinde 7 zur Halterung des mit einem entsprechenden Außengewinde versehenen Werkzeugs vorgesehen. Eine Werkzeugaufnahme zum Aufnehmen eines einschraubbaren Werkzeuges ist z.B. in der DE 10 2015 112 079 A1 offenbart. Auf den Inhalt dieser Druckschrift wird bezüglich der Merkmale einer solchen Werkzeugaufnahme vollumfänglich Bezug genommen.

Zwischen einer werkzeugseitigen vorderen Stirnseite 8 des Adapters 1 und dem Innengewinde 7 weist die Aufnahmeöffnung 6 einen ersten Auflagebereich 9 mit einer ersten konischen Auflagefläche 10 und einer zweiten konischen Auflagefläche 11 für die Anlage entsprechender Führungsflächen am Werkzeug auf. Die Auflageflächen 10 und 11 grenzen unmittelbar aneinander an und haben unterschiedliche Kegelwinkel. An dem inneren Ende des Gewindes 7 schließt sich ein zweiter Auflagebereich 12 mit mehreren in Umfangsrichtung voneinander beabstandeten, radial nach innen vorstehenden, stegförmigen Auflageelementen 13 an. Durch diese Auflageelemente 13 wird das Werkzeug zusätzlich zentriert und radial gedämpft innerhalb der Aufnahmeöffnung 6 geführt.

Aus Figur 1 ist ersichtlich, dass an der konischen Außenfläche 5 am Außenkonus 3 des Adapters 1 mehrere Formschlusselemente 14 zur drehgesicherten Halterung des Adapters 1 bei der Befestigung eines Werkzeugs vorgesehen sind. Bei der gezeigten Ausführung sind die Formschlusselemente 14 in Form von mehreren über den Umfang verteilten Schlüsselflächen 15 ausgebildet, die zwischen dem schmaleren Einsteckende 4 und einem breiteren vorderen Ende 16 des Außenkonus 3 angeordnet sind. Die vorzugsweise in einem in Axialrichtung gesehen mittleren Bereich des Außenkonus 3 angeordneten Schlüsselflächen 15 wirken mit im Folgenden noch näher erläuterten Halteflächen an einer Haltevorrichtung zusammen, um eine Drehung des Adapters beim Einschrauben eines Werkzeugs zu verhindern.

Das Anbringen der Schlüsselflächen 15 in einem mittleren Teil des Außenkonus 3 hat den Vorteil, dass über und unter den Schlüsselflächen 15 noch durchgängig umlaufende konische Außenflächen zur Anlage an einem entsprechenden Innenkonus in einem Futterkörper des Spannzangenfutters verbleiben. Dadurch kann eine gute Führung und Zentrierung des Adapters innerhalb der Futterkörpers erreicht werden. Die vorzugsweise sechs in Umfangsrichtung gleichwinklig beabstandeten Schlüsselflächen 15 können aber auch in einem vorderen oder hinteren Bereich des Außenkonus 3 angeordnet sein. In einer vorteilhaften Ausführung weisen die Schlüsselflächen 15 in Axialrichtung des Aufnahmekörpers 1 gesehen eine Länge von 1/5 bis 1/3 der Länge des Außenkonus 3 auf.

Bei der gezeigten Ausführung ist die Aufnahmeöffnung 6 im Adapter 1 als Durchgangsbohrung mit einem im Durchmesser erweiterten zentralen Eingang 17 am Einsteckende 4 des Außenkonus 3 ausgeführt. In dem Adapter 1 sind im Bereich der Schlüsselflächen 15 radiale Durchgangsöffnungen 18 angeordnet, die in den Eingang 17 der Aufnahmeöffnung 6 münden. Zweckmäßigerweise kann an jeder zweiten Schlüsselfläche 15 eine mit dem Eingang 17 verbundene Durchgangsöffnung 18 vorgesehen sein.

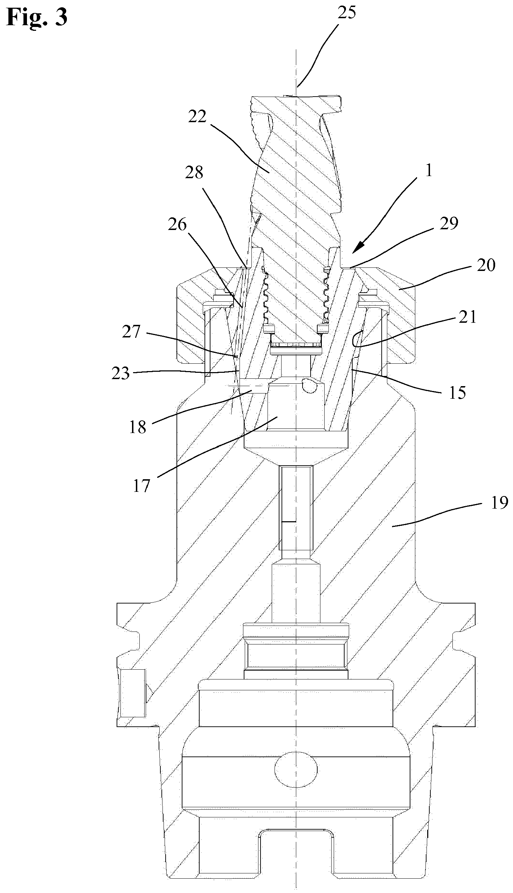

In Figur 3 ist ein Spannzangenfutter mit einem Futterkörper 19 und einer mit dem Futterkörper 19 verschraubbaren Überwurfmutter 20 gezeigt, In einen Innenkegel 21 des Futterkörpers 19 ist der Adapter 1 mit einem darin eingeschraubten Werkzeug 22 eingesetzt. Wie aus Figur 3 hervorgeht, sind die Schlüsselflächen 15 derart ausgeführt, dass sich bei einem in das Spannzangenfutter eingesetzten Adapter 1 zwischen den Schlüsselflächen 15 und dem Innenkegel 21 im Futterköper 19 des Spannzangenfutters ein Stauraum 23 bildet. Der Stauraum 23 an den mit den Bohrungen 18 versehenen Schlüsselflächen 15 ist über die Durchgangsöffnungen 18 mit dem Eingang 17 verbunden.

Um eine Verbindung zwischen benachbarten Schlüsselflächen 15 herzustellen, kann gemäß Figur 1 an der Außenfläche 5 des Außenkonus 3 ein in der Höhe der Schlüsselflächen 15 umlaufender Verteilerkanal 24 angeordnet sein. Der Verteilerkanal 24 kann gebildet werden durch einen vorzugsweise zylindrischen Bereich, dessen Durchmesser größer ist als der Abstand von zwei gegenüberliegenden Schlüsselflächen 15. Dadurch wird zwischen dem Verteilerkanal 24 und dem Innenkonus des Spannzangenfutters ein umlaufender Verteilerraum gebildet, in den ein am Eingang 18 des Adapters 1 eingespeistes Kühl- oder Schmiermittel über die radialen Durchgangsöffnungen 18 geleitet werden kann. In einer alternativen Ausführung können die Schlüsselflächen 15 so groß dimensioniert sein, dass sich in Umfangsrichtung benachbarte Flächen überlappen und so ein umlaufender Stau- und Verteilerraum entsteht.

In den Figuren 2 und 3 ist erkennbar, dass in dem Adapter 1 einer oder mehrere gegenüber einer Mittelachse 25 des Adapters 1 geneigte Zufuhrkanäle 26 für die Zuführung eines Kühlmittels oder eines anderen Arbeitsfluids zu dem im Adapter 1 befestigten Werkzeug vorgesehen sind. Bei dem gezeigten Ausführungsbeispiel sind in dem Adapter 1 drei in Umfangsrichtung gleichwinklig verteilte Zufuhrkanäle 26 vorgesehen. Die Zufuhrkanäle 26 sind derart angeordnet, dass sie von den mit Bohrungen 18 versehenen Schlüsselflächen 15 oder vom Verteilerkanal 24 nach oben in Richtung der zum Werkzeug gewandten vorderen Stirnseite 8 des Aufnahmekörpers 1 führen. Das am Eingang 17 des Adapters 1 eingespeiste Kühl- oder Schmiermittel kann so über die Durchgangsöffnungen 18 in den zwischen den Schlüsselflächen 15 bzw. dem Verteilerkanal 24 und dem Innenkegel 21 des Futterkörpers 19 gebildeten Stauraum 23 und von dort über die Zufuhrkanäle 26 zu dem Werkzeug gelangen.

Durch den umlaufenden Verteilerkanal 24 am Außenumfang des Außenkonus 3 stehen alle radialen Bohrungen 18 und alle Zufuhrkanäle 21 miteinander in Verbindung. Die Anzahl der Bohrungen 18 bezogen auf die Schlüsselflächen 15 kann damit beliebig sein. Bevorzugt ist jede zweite Schlüsselfläche 15 mit einer radialen Bohrung 18 und jede dazwischen liegende Schlüsselfläche 15 mit einem Zufuhrkanal 26 versehen. Auf diese Weise wird der Aufnahmekörper 1 des Adapters am wenigsten geschwächt.

In einer besonders bevorzugten Ausführung weisen die Zufuhrkanäle 26 einen in Umfangsrichtung in der Mitte und in axialer Richtung am werkzeugseitigen Ende der Schlüsselflächen 15 angeordneten Eingang 27 und einen Ausgang 28 an einer gegenüber der werkzeugseitigen Stirnseite 8 zurückversetzten Ringfläche 29 des Adapters 1 auf.

In einer weiteren Ausführung gibt es keinen umlaufenden Stau- bzw. Verteilerkanal. Dann muss an zumindest einer Schlüsselfläche 15 eine radiale Bohrung 18 münden und ein Zufuhrkanal 26 beginnen.

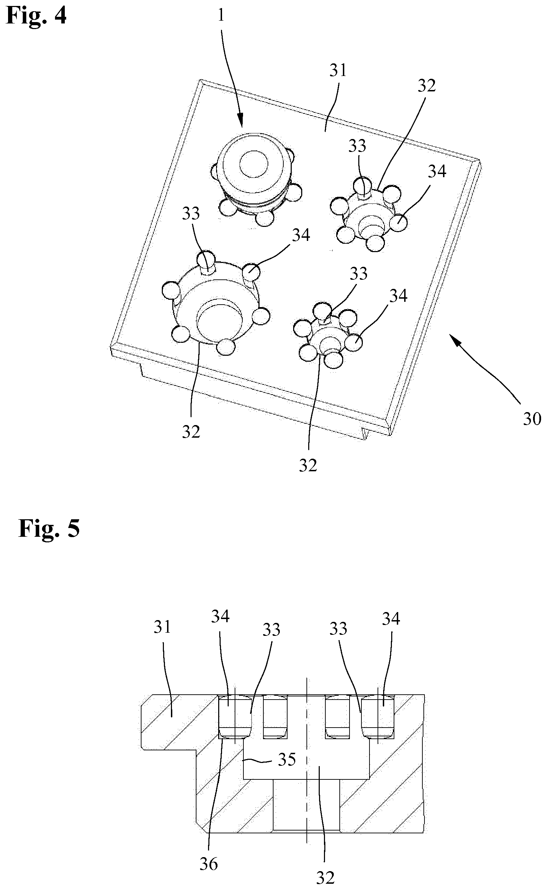

Zur Montage eines mit einem Gewinde versehenen Werkzeugs in einem vorstehend beschriebenen Adapter 1 kann der Adapter 1 in eine in Figur 4 gezeigte Haltevorrichtung 30 eingesetzt werden. Die Haltevorrichtung 30 weist einen plattenförmigen Träger 31 mit mehreren unterschiedlich großen Öffnungen 32 für unterschiedliche Adapter auf. An der Innenseite der Öffnungen 32 sind mehrere über den Umfang verteilte Halteflächen 33 zum formschlüssigen Eingriff mit den als Schlüsselflächen 15 ausgeführten Formschlusselementen 14 vorgesehen. Bei der gezeigten Ausführung sind die Halteflächen 33 an mehreren gleichmäßig über den Umfang der Öffnungen 32 verteilten Haltestiften 34 angeordnet. Dadurch sind die Halteflächen 33 nach innen gewölbt, so dass ein linienförmiger Kontakt zwischen den Schlüsselflächen 15 und den Halteflächen 33 entsteht.

Wie aus Figur 5 ersichtlich ist, sind die Haltestifte 34 so in dem plattenförmigen Träger 31 angeordnet, dass die Halteflächen 33 nach innen gegenüber einer Innenwand 35 der Öffnung 32 vorstehen. Die Haltestifte 34 sind hierzu in entsprechenden, nach innen offenen Bohrungen 36 eingesetzt.

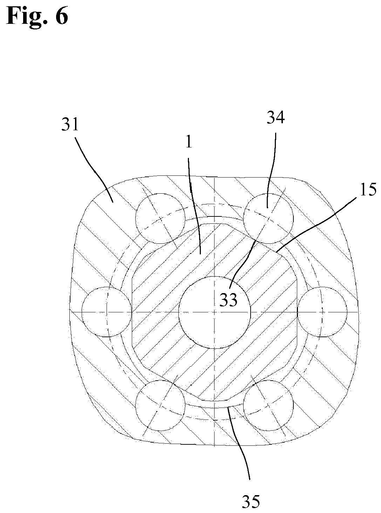

Gemäß Figur 6 sind die Haltestifte 34 so über den Umfang der Öffnung 32 verteilt, dass die Haltestifte 34 mit ihren Halteflächen 33 beim Einsetzen des Adapters 1 nahe der Mitte der Schlüsselflächen 15 angeordnet sind. Zu diesem Zweck darf der radiale Spalt zwischen den Halteflächen 33 und den Schlüsselflächen 15 nicht zu groß werden. In einer bevorzugten Ausführungsform ist der Spalt kleiner als 0,3 mm, besonders bevorzugt kleiner als 0,15 mm und noch besser kleiner als 0,1 mm. Dadurch können die Belastungen des Adapters 1 beim Einschrauben eines Werkzeugs möglichst gering gehalten werden, da die Kontaktlinien zwischen Halteflächen 33 und Schlüsselflächen 15 im Bereich nahe der Mitte der Schlüsselflächen 15 am längsten sind. Bei sechs über den Umfang gleichmäßig verteilten Schlüsselflächen 15 sind die Haltestifte 34 in Umfangsrichtung um jeweils 60° versetzt.

### Bezugszeichenliste

- 1: Adapter
- 2: Aufnahmebereich
- 3: Außenkonus
- 4: Einsteckende
- 5: Konische Außenfläche
- 6: Aufnahmeöffnung
- 7: Innengewinde
- 8: Werkstückseitige Stirnseite
- 9: Erster Auflagebereich
- 10: Erste Auflagefläche
- 11: Zweite Auflagefläche
- 12: Zweiter Auflagebereich
- 13: Auflageelement
- 14: Formschlusselement
- 15: Schlüsselfläche
- 16: Vorderes Ende
- 17: Eingang
- 18: Bohrung
- 19: Futterkörper
- 20: Überwurfmutter
- 21: Innenkegel
- 22: Werkzeug
- 23: Stauraum
- 24: Verteilerkanal
- 25: Mittelache
- 26: Zufuhrkanal
- 27: Eingang
- 28: Ausgang
- 29: Ringfläche
- 30: Haltevorrichtung
- 31: Träger
- 32: Öffnung
- 33: Haltefläche
- 34: Haltestift
- 35: Innenwand
- 36: Bohrung

## Patentansprüche

1. Adapter (1) zur Halterung eines Werkzeugs in einem Spannzangenfutter, wobei der Adapter (1) einen Außenkonus (3) zur Aufnahme des Adapters (1) in dem Spannzangenfutter enthält, **dadurch gekennzeichnet, dass** der Adapter (1) ein Gewinde (7) zur Befestigung des Werkzeugs aufweist und dass an einer Außenfläche (5) des Außenkonus (3) mehrere Formschlusselemente (14) zur drehgesicherten Halterung des Aufnahmekörpers (1) bei der Befestigung des Werkzeugs angeordnet sind.

2. Adapter (1) nach Anspruch 1, **dadurch gekennzeichnet, dass** die Formschlusselemente (14) in einem mittleren Bereich des Außenkonus (3) angeordnet sind.

3. Adapter (1) nach Anspruch 1 oder 2, **dadurch gekennzeichnet, dass** die Formschlusselemente (14) als mehrere über den Umfang des Außenkonus (3) verteilte Schlüsselflächen (15) ausgebildet sind.

4. Adapter (1) nach Anspruch 3, **dadurch gekennzeichnet, dass** die Schlüsselflächen (15) in Axialrichtung des Adapters (1) gesehen eine Länge von 1/5 bis 1/3 der Länge des Außenkonus (3) aufweisen.

5. Adapter (1) nach Anspruch 3 oder 4, **dadurch gekennzeichnet, dass** an mindestens einer Schlüsselfläche (15) eine radiale Durchgangsöffnung (18) vorgesehen ist, die in einen Einlass (17) an einem Einsteckende (4) des Außenkonus (3) mündet.

6. Adapter (1) nach Anspruch 5, **dadurch gekennzeichnet, dass** in dem Aufnahmekörper (1) mindestens ein Zufuhrkanal (26) für die Weiterleitung eines über den Einlass (17) und die mindestens eine Durchgangsöffnung (18) zugeführten Kühl- oder Schmiermittels zu einer werkzeugseitigen Stirnseite (8) des Adapters (1) angeordnet ist.

7. Adapter (1) nach Anspruch 6, **dadurch gekennzeichnet, dass** der mindestens eine Zufuhrkanal (26) schräg zu einer Mittelachse (25) des Adapters (1) verläuft.

8. Adapter (1) nach Anspruch 6 oder 7, **dadurch gekennzeichnet, dass** der mindestens eine Zufuhrkanal (26) einen in Umfangsrichtung in der Mitte und in axialer Richtung am werkzeugseitigen Ende der Schlüsselflächen (15) angeordneten Eingang (27) enthält.

9. Adapter (1) nach einem der Ansprüche 6 bis 8, **dadurch gekennzeichnet, dass** der mindestens eine Zufuhrkanal (21) einen Ausgang (28) an einer gegenüber der werkzeugseitigen Stirnseite (8) zurückversetzten Ringfläche (29) des Aufnahmekörpers (1) enthält.

10. Adapter (1) nach einem der Ansprüche 3 bis 9, **dadurch gekennzeichnet, dass** an der Außenfläche (5) des Außenkonus (3) ein in der Höhe der Schlüsselflächen (15) umlaufender Verteilerkanal (24) angeordnet ist.

11. Spannzangenfutter mit einem Futterkörper (19) und einem in einem Innenkegel (21) des Futterkörpers (19) angeordneten Adapter (1), **dadurch gekennzeichnet, dass** der Adapter (1) nach einem der Ansprüche 1 bis 10 ausgebildet ist.

12. Spannzangenfutter nach Anspruch 11, **dadurch gekennzeichnet, dass** die Formschlusselemente (14) mit dem Innenkegel (21) des Futterkörpers (19) einen Stauraum (23) begrenzen.

13. Haltevorrichtung (30) zur drehgesicherten Halterung eines Adapters, **gekennzeichnet durch** einen Träger (31) mit mindestens einer Öffnung (32) und an der Innenseite der Öffnung (32) angeordneten Halteflächen (33), die zum formschlüssigen Eingriff mit den Formschlusselementen (14) eines Adapters nach einem der Ansprüche 1 bis 10 ausgebildet sind.

14. Haltevorrichtung (30) nach Anspruch 13, **dadurch gekennzeichnet, dass** die Halteflächen (33) nach innen gewölbt sind.

15. Haltevorrichtung (30) nach Anspruch 13 oder 14, **dadurch gekennzeichnet, dass** die Halteflächen (33) an mehreren gleichmäßig über den Umfang der Öffnung (32) verteilten Haltestiften (34) angeordnet sind.

16. Haltevorrichtung (30) nach Anspruch 15, **dadurch gekennzeichnet, dass** die Haltestifte (34) so über den Umfang der Öffnung (32) verteilt sind, dass die Haltestifte (34) beim Einsetzen eines Adapters (1) in der Mitte der Schlüsselflächen (15) angeordnet sind.

17. System aus einem Adapter (1) nach einem der Ansprüche 1 bis 10 und einer Haltevorrichtung (30) nach einem der Ansprüche 13 bis 16.

18. System nach Anspruch 17, **dadurch gekennzeichnet, dass** ein radialer Spalt zwischen den Halteflächen (33) und den Formschlusselementen (14) kleiner als 0,3 mm ist..

19. System nach Anspruch 18, **dadurch gekennzeichnet, dass** der radiale Spalt zwischen den Halteflächen (33) und den Formschlusselementen (14) kleiner als 0,1 mm ist.
